# EUROPÄISCHE PATENTSCHRIFT

(11) **EP 1 606 072 B1**
(45) Veröffentlichungstag und Bekanntmachung des Hinweises auf die Patenterteilung: **02.09.2009**
(21) Anmeldenummer: 04722567.7
(22) Anmeldetag: 23.03.2004
(51) Int. Cl.: B23B 5/32

(54) **MOBILE RADSATZBEARBEITUNGSMASCHINE**
MOBILE MACHINE FOR MACHINING A PAIR OF WHEELS
MACHINE MOBILE POUR L'USINAGE D'UNE PAIRE DE ROUES

(30) Priorität: 27.03.2003 DE 10313725
(43) Veröffentlichungstag der Anmeldung: 21.12.2005
(73) Patentinhaber: Hegenscheidt-MFD GmbH & Co. KG, 41812 Erkelenz (DE)
(72) Erfinder: REICHE, Hans-Joachim, 40699 Erkrath (DE); ROSENLAND, Dieter, 41844 Wegberg (DE)
(74) Vertreter: Simons, Johannes
(86) Internationale Anmeldenummer: PCT/EP2004/003039
(87) Internationale Veröffentlichungsnummer: WO 2004/085100

(56) Entgegenhaltungen:
- DE-A- 10 025 724
- US-A- 1 451 958
- US-A- 3 203 286

## Beschreibung

Die Erfindung betrifft ein Werkzeugmaschine zum Bearbeiten von den Fahrzeugen oder Fahrwerken von Eisenbahnfahrzeugen eingebauten Rädern oder Radsätzen mit einem im Grundriss rechteckigen Rahmen, der an seinen vier Ecken jeweils auf Rollen gelagert ist, welche entlang eines Werkstattgleises geführt werden, wobei die Werkzeugmaschine neben Antriebsrollen axiale Führungsrollen aufweist, mit denen das Eisenbahnrad oder der Radsatz in Bezug auf die Längsmitte der Werkzeugmaschine zentriert und geführt wird.

Eine derartige Maschine ist beispielsweise bekannt geworden aus der Patentanmeldung der Anmelderin DE 100 25 724 A1. Ausführlich beschrieben wird diese Werkzeugmaschine auch in einem Firmenprospekt der Anmelderin mit der Bezeichnung "Mobile Radsatzdrehmaschine".

Die bekannte mobile Radsatzdrehmaschine ist für vielerlei Anwendungen vorgesehen. So dient sie beispielsweise unter anderem auch dazu, einzelne Räder oder Radsätze, welche in den Fahrwerken von Eisenbahnfahrzeugen eingebaut verbleiben, an deren Umrissen zu bearbeiten. Hierbei werden an die Genauigkeit des Bearbeitungsergebnisses hohe Anforderungen gestellt.

Erfahrungen, die in Eisenbahnwerkstätten gemacht werden, haben gezeigt, dass die Drehgestelle von schweren Eisenbahnfahrzeugen, beispielsweise von großen Lokomotiven, die an sich sehr schwer sind und selbst mehrere Tonnen wiegen können, häufig einen hohen Verschleiß aufweisen. Im Falle großen Verschleißes ist es außerordentlich schwierig, die bekannte mobile Radsatzdrehmaschine in einer Weise unterhalb des Fahrwerks des Eisenbahnfahrzeugs so zu positionieren, dass das gewünschte genaue Bearbeitungsergebnis erzielt werden kann. Beispielsweise können die schweren Drehgestelle von schweren Lokomotiven bei entsprechendem Verschleiß einen seitlichen Versatz aufweisen, der so groß ist, dass er von der mobilen Radsatzdrehmaschine nicht mehr ausgeglichen werden kann. Entweder leidet die Genauigkeit des Arbeitsergebnisses darunter oder auf die mobile Radsatzdrehmaschine wirken derart hohe Kräfte ein, für welche sie nicht ausgelegt ist.

Daraus ergibt sich die Aufgabe für die Erfindung, die Führung einer in einem Werkstattgleis geführten Radsatzdrehmaschine so auszugestalten, dass die Maschine in die Lage versetzt wird, Verschleißerscheinungen an den schweren Fahrwerken von Eisenbahnfahrzeugen auszugleichen. Zugleich soll ein solcher Ausgleich mit an sich einfachen Mitteln erzielbar sein und die geforderte Genauigkeit des Arbeitsergebnisses der mobilen Radsatzdrehmaschine gewährleistet werden.

Die Aufgabe wird dadurch gelöst, dass an der Werkzeugmaschine Einrichtungen vorgesehen sind, mit deren Hilfe der rechteckige Rahmen der Werkzeugmaschine gegenüber dem Werkstattgleis seitlich verschiebbar wird. Die seitliche Verschiebbarkeit soll sich zu jeder Seite des Werkstattgleises erstrecken.

Zugleich sollen die Einrichtungen für die Verschiebung des Rahmens der Werkzeugmaschine in der Lage sein, den rechteckigen Rahmen der mobilen Radsatzdrehmaschine gegenüber dem Werkstattgleis auch in zwei Richtungen seitlich zur Gleismitte horizontal zu verschwenken.

Nach einer vorteilhaften Ausgestaltung ist vorgesehen, dass die Einrichtungen zum Verschieben und Verschwenken des Rahmens der mobilen Radsatzdrehmaschine identisch sind. Auf einfache Weise wird eine solche Einrichtung mit einem Druckmittel erzielt, dass aus einer Druckmittelquelle stammt und über Steuerungsorgane entsprechend der gewünschten Verschiebungsrichtung zu Druckmittelzylindern geleitet wird.

Zugleich soll die Steuerung des Druckmittels so ausgestaltet sein, dass der Rahmen der mobilen Radsatzdrehmaschine in jeder beliebigen Stellung der seitlichen Verschiebung und/oder horizontalen Verschwenkung verriegelbar ist.

Nachfolgend wird die Erfindung an einem Ausführungsbeispiel näher beschrieben. Es zeigen jeweils in vereinfachter und teilweise schematischer Darstellung die
- Fig. 1 eine Vorderansicht und
- Fig. 2 eine Draufsicht auf den Rahmen einer mobilen Radsatzdrehmaschine.

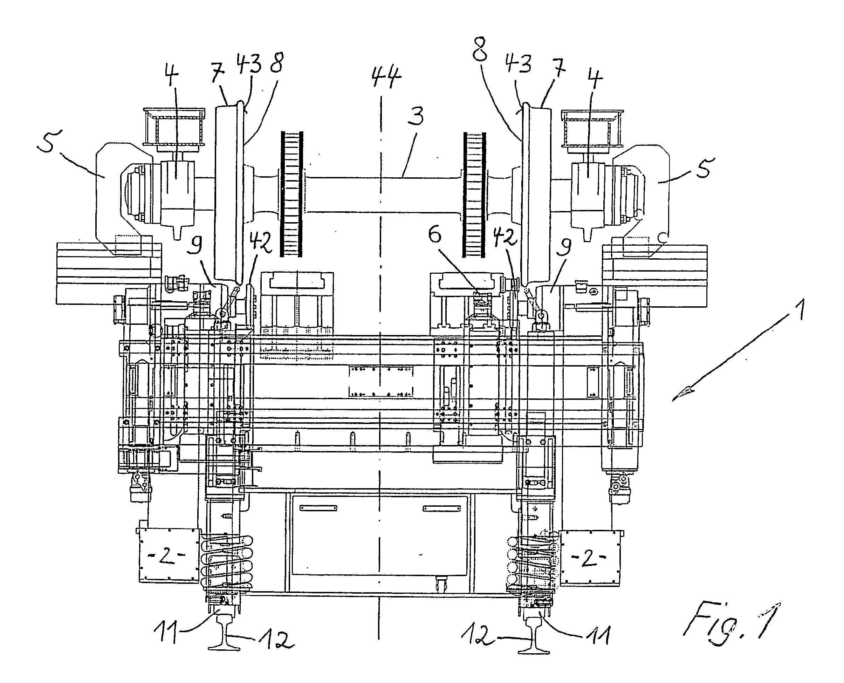

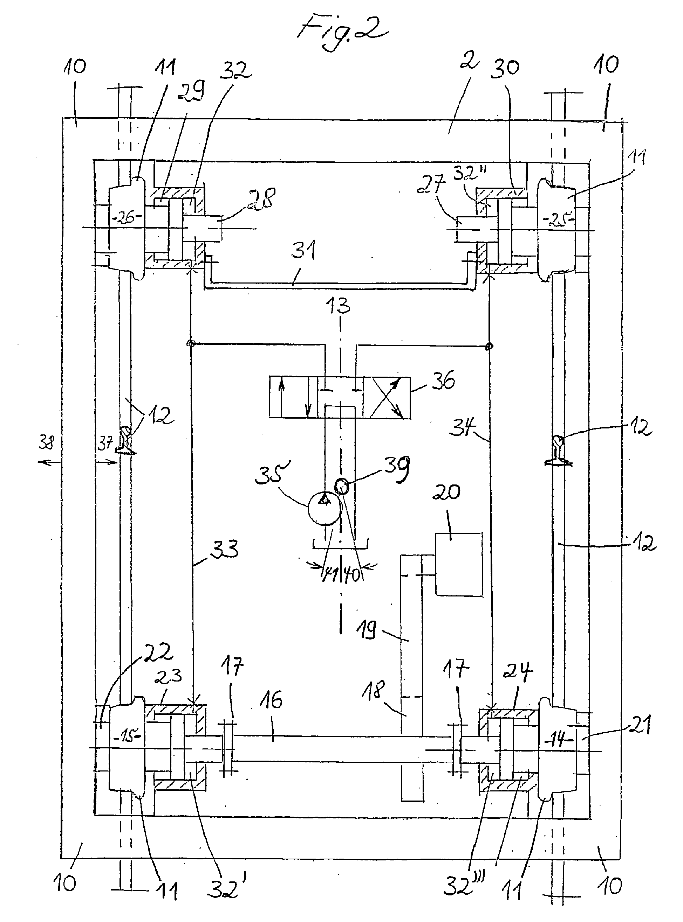

Die mit der Ziffer 1 bezeichnete mobile Radsatzdrehmaschine hat einen im Grundriss der Fig. 2 gesehenen rechteckigen Rahmen 2. Auf der mobilen Radsatzdrehmaschine 1 der Fig. 1 befindet sich beispielsweise ein Radsatz 3 eines Eisenbahnfahrzeugs (nicht gezeigt), der zu beiden Seiten in Radlagerkästen 4 gelagert ist und über Klammern 5, welche an den Radlagerkästen 4 angreifen, auf der mobilen Radsatzdrehmaschine 1 gehalten wird. Werkzeuge 6 sind dazu vorgesehen, das Umrissprofil 7 der Radscheiben 8 des Radsatzes 3 zu erzeugen, während der Radsatz 3 von Reibrollen 9 in Umdrehung versetzt wird. Der rotierende Radsatz 3 wird zugleich von axialen Führungsrollen 42, welche an den Radrücken 43 der Radscheiben 8 angreifen, in Bezug auf die Längsmitte 44 der Radsatzdrehmaschine 1 zentriert und geführt. Dabei stützen die axialen Führungsrollen 42 die Radscheiben 8 auch gegenüber entsprechenden Komponenten der von den Werkzeugen 6 auf die Radscheiben 8 ausgeübten Schnittkräfte ab.

Der Rahmen 2 ruht mit seinen vier Ecken 10 auf Profilrollen 11, die entlang eines Werkstattgleises 12 verfahrbar sind. Die Profilrollen 11 haben beispielsweise die Gestalt von Eisenbahnrädern mit geringem Durchmesser und haben einen festen gegenseitigen Abstand voneinander, welcher der Spurbreite des Gleises 12 entspricht. Die Mitte des Gleises 12 wird beispielsweise durch die strichpunktierte Linie 13 angedeutet.

Wie im Grundriss der Fig. 2 erkennbar, liegen die Profilrollen 11 jeweils einander paarweise gegenüber und haben auch in der Längsrichtung des Gleises 12 einen Abstand voneinander. Beispielsweise werden die beiden einander gegenüber liegenden Profilrollen 14 und 15 von einer dazwischen geschalteten Welle 16 überbrückt, die zusätzlich noch mit jeder Profilrolle 14 und 15 über eine flexible Kupplung 17 verbunden ist. Als flexible Kupplungen 17 dienen beispielsweise an sich bekannte Hardy-Scheiben. Zusätzlich befindet sich auf der Welle 16 noch eine Antriebstrommel 18, die über einen Riementrieb 19 mit einem Antriebsmotor 20 verbunden ist. Der Antriebsmotor 20 dient dazu, die mobile Radsatzdrehmaschine 1 im Gleis 12 längs der Gleismitte 13 zu bewegen und in eine Arbeitsstellung unterhalb eines aufgeständerten Eisenbahnfahrzeugs bzw. dessen Radsatz 3 zu bringen.

Die Achsen 21 und 22 der beiden Profilrollen 14 und 15 sind jeweils in Gehäusen 23 und 24 drehbar gelagert, welche als Teile des Rahmens 2 ausgestaltet sind. Das gleiche trifft zu für die beiden Profilrollen 25 und 26, deren Achsen 27 und 28 in Gehäusen 29 und 30 gelagert sind, die ebenfalls als Teile des rechteckigen Rahmens 2 ausgestaltet sind. Ähnlich wie die Achsen 21 und 22 enden die beiden Achsen 27 und 28 der beiden Profilrollen 25 und 26 kurz hinter deren Austritt aus den Gehäusen 29 bzw. 30. Die Gehäuse 29 und 30 sind darüber hinaus auch noch über eine Spurstange 31 miteinander verbunden.

Die Gehäuse 23, 24, 29 und 30 weisen jeweils Kammern 32 auf, welche als Druckmittelzylinder ausgestaltet sind. Die Kammern 32 können über Leitungen 33 und 34 mit einem Druckmittel beaufschlagt werden, welches von einer Druckmittelquelle 35 erzeugt und über einen Schieber 36 in der gewünschten Richtung zu den Kammern 32 geleitet wird.

In der beispielhaft in der Fig. 2 gezeigten Mittelstellung des Schiebers 36 werden alle 4 Kammern 32 vom Druckmittel im gleichen Maße beaufschlagt. Das hat zur Folge, dass sich der Rahmen 2 gegenüber der Mitte 13 des Werkstattgleises 12 in einer Mittelstellung befindet. In dieser Stellung wird der Rahmen 2 über die beaufschlagten Kammern 32 bei entsprechender Mittenstellung des Schiebers 36 zugleich verriegelt.

Beim Einstellen der linken Schaltstellung des Schiebers 36 werden beispielsweise nur die linken Kammern 32 und 32' beaufschlagt, während das Druckmittel aus den rechten Kammern 32" und 32"' abfließen kann. Die Folge davon ist, dass der Rahmen 2 gegenüber dem Werkstattgleis 12 in Richtung des Pfeils 37 seitlich verschoben wird. Der Betrag der Verschiebung beträgt zwischen 20 und 50, vorzugsweise 30 mm. Nachdem Verstellen des Schiebers 36 in die rechte Schaltstellung werden die rechten Kammern 32" und 32'" der Gehäuse 24 und 30 beaufschlagt mit der Folge, dass der Rahmen 2 gegenüber der Gleismitte 13 eine Verschiebung in der Richtung des Pfeils 38 erfährt.

Über geeignete weitere Steuereinrichtungen, ähnlich dem Schieber 36, kann erreicht werden, dass beispielsweise die Kammern 32 und 32'" der Gehäuse 29 und 24 gleichzeitig beaufschlagt werden. Diese zusätzlichen Steuerungsorgane wurden der Einfachheit halber in der Fig. 2 nicht mehr dargestellt, zumal sie ja dem einschlägigen Steuerungsfachmann ohnehin geläufig sind. Jedenfalls wird bei einer derartigen Beaufschlagung der Rahmen 2 gegenüber der Gleismitte 13 um seinen Mittelpunkt 39 um einen Winkel 40 horizontal verschwenkt. Das Gleiche gilt für das Verschwenken des Rahmens 2 um den Mittelpunkt 39 in Richtung des Schwenkwinkels 41. Die Schwenkwinkel 40 und 41 betragen jeweils zwischen 0 und 30°.

Auch in den Schwenkstellungen 40 und 41 kann der Rahmen 2 gegenüber dem Werkstattgleis 12 in geeigneter Weise fixiert werden. Durch gezielte Steuerungen, die wie gesagt dem einschlägigen Steuerungsfachmann geläufig sind, kann die mit den erfindungsgemäßen Einrichtungen ausgestattete mobile Radsatzdrehmaschine 1 zugleich beliebige seitliche Verschiebungen 37 oder 38 wie auch Verschwenkungen 40 oder 41 erfahren, so dass sie in optimaler Weise an das Fahrwerk bzw. Rad oder Radsatz eines zu bearbeitenden Eisenbahnfahrzeugs angepasst werden kann, zumal wenn sich dieses Fahrwerk durch besonders hohes Gewicht und gegebenenfalls großen Verschleiß auszeichnet.

Üblicherweise wird die Druckmittelquelle 35 mit Hydrauliköl als Druckmittel gespeist. Möglich ist es aber auch, anstelle von Hydrauliköl Druckluft zu verwenden und die mobile Radsatzdrehmaschine 1 mit Hilfe von pneumatischen Druckmitteln verschieb- und verschwenkbar zu machen. Daneben sind mechanische Einrichtungen denkbar, welche im Zusammenwirken mit hydraulischen oder pneumatischen Druckmitteln das Bewegen der mobilen Radsatzdrehmaschine 1 gegenüber dem Werkstattgleis 12 bewirken können.

### Bezugszeichenliste

- 1: mobile Radsatzdrehmaschine
- 2: rechteckiger Rahmen
- 3: Radsatz
- 4: Radlagerkasten
- 5: Klammer
- 6: Werkzeug
- 7: Umrissprofil
- 8: Radscheibe
- 9: Reibrolle
- 10: Ecke
- 11: Profilrolle
- 12: Gleis
- 13: Mitte des Gleises
- 14: Profilrolle
- 15: Profilrolle
- 16: Welle
- 17: flexible Kupplung
- 18: Riemenscheibe
- 19: Riementrieb
- 20: Motor
- 21: Achse
- 22: Achse
- 23: Gehäuse
- 24: Gehäuse
- 25: Profilrolle
- 26: Profilrolle
- 27: Achse
- 28: Achse
- 29: Gehäuse
- 30: Gehäuse
- 31: Spurstange
- 32: Kammer
- 33: Leitung
- 34: Leitung
- 35: Druckmittelquelle
- 36: Schieber
- 37: seitliche Verschiebung
- 38: seitliche Verschiebung
- 39: Mittelpunkt
- 40: Schwenkwinkel
- 41: Schwenkwinkel
- 42: axiale Führungsrolle
- 43: Radrücken
- 44: Längsmitte

## Patentansprüche

1. Werkzeugmaschine (1) zum Bearbeiten von in Fahrzeugen oder Fahrwerken von Eisenbahnfahrzeugen eingebauten Rädern oder Radsätzen (3) mit einem im Grundriss rechteckigen Rahmen (2), der an seinen vier Ecken (10) jeweils auf Profilrollen (14, 15, 25, 26) gelagert ist, welche entlang eines Werkstattgleises (12) geführt werden, wobei die Werkzeugmaschine (1) neben Antriebsrollen (9) axiale Führungsrollen (42) aufweist, mit denen das Eisenbahnrad oder der Radsatz (3) in Bezug auf die Längsmitte (44) der Werkzeugmaschine (1) zentriert und geführt wird,
**dadurch gekennzeichnet, dass** die Achsen (21, 22, 27, 28) der Profilrollen (14, 15, 25, 26) jeweils in Gehäusen (23, 24, 29, 30) drehbar gelagert sind, welche als Teile des rechteckigen Rahmens (2) ausgestaltet sind und Kammern (32, 32', 32 ", 32"') aufweisen, die als Druckmittelzylinder zum Verschieben (37, 38) und/oder Verschwenken (40, 41) des Rahmens (2) im Werkstattgleis (12, 13) ausgestaltet sind.

2. Werkzeugmaschine nach Anspruch 1, **dadurch gekennzeichnet, dass** der Rahmen (2) der Werkzeugmaschine (1) mit Hilfe der Druckmittelzylinder in beliebiger Stellung gegenüber dem Werkstattgleis (12, 13) verriegelbar ist.

3. Werkzeugmaschine nach einem der Ansprüche 1 bis 2,
**dadurch gekennzeichnet, dass** die Druckmittelzylinder zum Verschieben (37, 38) und/oder Verschwenken (40, 41) des Rahmens (2) der Werkzeugmaschine (1) mit einer Druckmittelquelle (35) und Steuerungsorganen (36) für ein Druckmedium verbunden sind.

## Claims

1. Machine tool (1) for machining wheels and wheelsets (3) installed in vehicles or undercarriages of rail vehicles with a rectangular frame (2) that is mounted on profile rollers (14, 15, 25, 26) at each of its four corners (10) which are guided on a workshop track (12) whereby the machine tool (1) has guide rollers (42), in addition to drive rollers (9), with which the railway wheel or the wheelset (3) is centred and guided in relation to the longitudinal centre (44) of the machine tool (1),
**characterised in that** the axles (21, 22, 27, 28) of the profile rollers (14, 15, 25, 26) are each mounted in housings (23, 24, 29, 30) such that they can rotate. The housings are designed as part of the rectangular frame (2) and have chambers (32, 32', 32', 32') that are designed as pressure medium cylinders for moving (37, 38) and/or swivelling (40, 41) the frame (2) in the workshop rail (12, 13).

2. Machine tool according to claim 1,
**characterised in that** the frame (2) of the machine tool (1) can be locked in any position in relation to the workshop rail (12, 13) by means of the pressure medium cylinders.

3. Machine tool according to one of the claims 1 to 2,
**characterised in that** the pressure medium cylinders for moving (36, 38) and/or swivelling (40, 41) the frame (2) of the machine tool (1) are connected to a pressure medium source (35) and control elements (36) for a pressure medium.

## Revendications

1. Machine-outil (1) pour l'usinage d'essieux montés ou de roues (3) installés dans des véhicules ou dans des mécanismes de roulement pour véhicules ferroviaires avec un cadre rectangulaire (2) sur le tracé, logé au niveau de ses quatre angles (10) sur les galets profilés respectifs (14, 15, 25, 26) qui sont guidés le long d'une voie de réparations (12) ; la machine-outil (1) comporte à côté des galets d'entraînement (9) des galets de guidage axial (42) au moyen desquels la roue ferroviaire ou l'essieu monté (3) est centré et guidé en fonction du centre longitudinal (44) de la machine-outil (1),
**caractérisée en ce que** les axes (21, 22, 27, 28) des galets profilés (14, 15, 25, 26) sont logés de manière rotative dans les boîtiers respectifs (23, 24, 29, 30) faisant partie du cadre rectangulaire (2) et disposant de chambres (32, 32', 32", 32"'), conçus comme vérins à fluide sous pression permettant de déplacer (37, 38) et/ou de basculer (40, 41) le cadre (2) sur la voie de réparations (12, 13).

2. Machine-outil selon la revendication 1,
**caractérisée en ce que** le cadre (2) de la machine-outil (1) est verrouillable au moyen des vérins à fluide sous pression à n'importe quelle position par rapport à la voie de réparations (12, 13).

3. Machine-outil selon les revendications 1 à 2,
**caractérisée en ce que** les vérins à fluide sous pression pour déplacer (37, 38) et/ou basculer (40, 41) le cadre (2) de la machine-outil (1) sont reliés à une source de fluide sous pression (35) et des dispositifs de commande (36) pour fluide sous pression.
